# EUROPEAN PATENT APPLICATION

(11) **EP 4 644 084 A1**
(43) Date of publication of application: **05.11.2025**
(21) Application number: 24173734.5
(22) Date of filing: 02.05.2024
(51) Int. Cl.: B29C 45/17, B29D 35/02

(54) **A SUPERCRITICAL MOLDING METHOD FOR MANUFACTURING A DOUBLE-LAYER SOLE STRUCTURE**

(71) Applicant: Hsu, Yi-Hao, Taichung City 406020 (TW)
(72) Inventor: Hsu, Yi-Hao, Taichung City 406020 (TW)
(74) Representative: Cabinet Chaillot

(57) **Abstract**

A supercritical molding method (3) includes a first injecting operation (32) executed by covering a lower mold (411) with a partition mold (412) and then injecting a first injection material (M1) to form a first semi-finished sole (51), a first opening operation (33) executed by separating the partition mold (412) from the lower mold (411) and cutting a first surplus material (511) off the first semi-finished sole (51) to form a first sole (5A), a second injecting operation (34) executed by covering the lower mold (411) with an upper mold (413) and then injecting a second injection material (M2) to form a second semi-finished sole (52), and a second opening operation (35) executed by separating the upper mold (413) from the lower mold (411) and cutting a second surplus material (521) off the second semi-finished sole (52) to form a second sole (5B) joined to the first sole (5A). Accordingly, a double-layer sole structure (5) having the first sole (5A) and the second sole (5B) is quickly manufactured.

## Description

### 1. Field of the Invention

This invention relates to an injection molding technique and relates particularly to a supercritical molding method capable of manufacturing a double-layer sole structure.

### 2. Description of the Related Art

A shoe is a protective covering for the foot and is also used to keep the foot warm. There are various shoes applied to various applications. Nowadays, many people wear shoes for fitting their designated clothes and for participating in special occasions, so the style of the shoes becomes a unique element of the popular trend.

Each of the shoes includes a sole like a midsole and an outsole, a vamp, an insole, etc. The soles mainly function to support the feet of the user which are in contact with a ground and provide buffering force against ground reaction forces . The common material of the outsole and the midsole is rubber, polyurethane (PU), ethylene vinyl acetate (EVA), etc. Generally, it needs to conduct a sole-grinding operation and a sole-cementing operation manually for joining the midsole to the outsole. By comparison with the increased assembling demand placed on the mechanical automation, this manual mode is extremely inconvenient.

Furthermore, the common materials have respective advantages and disadvantages. For example, a rubber-made sole has good support force and good durability but has poor shock-absorbing ability and poor elasticity because of its weight, which causes the ground reaction forces to be quickly and directly delivered to the feet of the user. Because of these disadvantages, some users may feel hard or stiff while wearing the shoes and may not adapt themselves to the rubber-made sole. Therefore, there have been some injection methods for manufacturing a sole formed with two colors or made of two different materials. A conventional injection method is mainly executed by using a composite mold and conducting a heating operation. Injection materials used in the conventional injection method are subjected to chemical foaming. The method includes injecting two injection materials which are made of different materials or differ in colors into the composite mold simultaneously, and adhering the injection materials to each other under particular temperatures and by chemical foaming. However, the conventional injection method is different from a supercritical injection molding process which is based on pressure and physical foaming. The simultaneous injections of two materials adopted in the convention injection method cannot be adapted to the supercritical injection molding process. Accordingly, it is a goal how to manufacture a sole having two different materials or two different colors in a supercritical injection molding process.

### SUMMARY OF THE INVENTION

An object of this invention is to provide an injection molding method which is capable of forming a double-layer sole structure quickly by using a supercritical injection molding technique.

A supercritical molding method is as defined in claim 1. The supercritical molding method for manufacturing a double-layer sole structure includes a preparing operation, a first injecting operation, a first opening operation, a second injecting operation, and a second opening operation.

The preparing operation includes preparing an injection molding assembly, and the injection molding assembly includes a mold system, a gas system connected to the mold system, and an injector adapted to inject a first injection material and a second injection material into the mold system. The mold system includes a lower mold, a partition mold removably engaged with the lower mold, and an upper mold removably engaged with the lower mold. The gas system includes a pressure source adapted to introduce gas into the mold system and a pump unit adapted to pump the gas out of the mold system. The first injecting operation includes covering the lower mold with the partition mold closely so that a first injection space is formed between the lower mold and the partition mold and communicated with at least one first channel which is formed through the partition mold, pumping the gas into the first injection space with the pressure source so that the first injection space is in a high-pressure state, operating the injector to inject the first injection material into the first injection space through the aforementioned at least one first channel, and operating the pump unit to pump the gas out of the first injection space while injecting the first injection material into the first injection space to create a vacuum whereby the first injection material expands in the first injection space and fills the aforementioned at least one first channel, thereby forming a first semi-finished sole. The first semi-finished sole includes a first sole body and a first surplus material protruding from the first sole body. The first opening operation includes separating the partition mold from the lower mold, cutting the first surplus material off the first sole body to form a first sole, and leaving the first sole in the lower mold.

The second injecting operation includes covering the lower mold with the upper mold closely so that a second injection space is formed between the lower mold and the upper mold and communicated with at least one second channel which is formed through the upper mold, pumping the gas into the second injection space with the pressure source so that the second injection space is in a high-pressure state, operating the injector to inject the second injection material into the second injection space through the aforementioned at least one second channel, and operating the pump unit to pump the gas out of the second injection space while injecting the second injection material into the second injection space to create a vacuum whereby the second injection material expands in the second injection space and fills the aforementioned at least one second channel, thereby forming a second semi-finished sole. The second semi-finished sole includes a second sole body joined to the first sole and a second surplus material protruding from the second sole body. The second opening operation includes separating the upper mold from the lower mold and cutting the second surplus material off the second sole body to form a second sole. After cutting off the second surplus material, the second sole is combined with the first sole, and the combination is defined as a double-layer sole structure. By executing the above operations in sequence, the double-layer sole structure consisting of the first sole and the second sole can be quickly and efficiently manufactured in a supercritical injection molding manner.

Preferably, the first sole and the second sole differ in colors for providing a good aesthetic appearance.

Preferably, the first injection material is different from the second injection material. When the first injection material and the second injection material are made of different materials, both soles can differ in the softness and hardness of material to meet the demand of users.

Preferably, a reinforcing operation is executed between the first opening operation and the second injecting operation so that the first sole is firmly joined to the second sole.

### BRIEF DESCRIPTION OF THE DRAWINGS

Fig. 1 is a block diagram showing execution operations of a first preferred embodiment of this invention;
Fig. 2 is a schematic view showing a preparing operation of this invention;
Fig. 3 is a schematic view of the first preferred embodiment showing the execution operations for manufacturing a double-layer sole structure;
Fig. 4 is a block diagram showing execution operations of a second preferred embodiment of this invention;
Fig. 5 is a schematic view of the second preferred embodiment showing the execution operations for manufacturing a double-layer sole structure; and
Fig. 6 is a schematic view showing a variation of the second preferred embodiment.

### DETAILED DESCRIPTION OF THE PREFERRED EMBODIMENTS

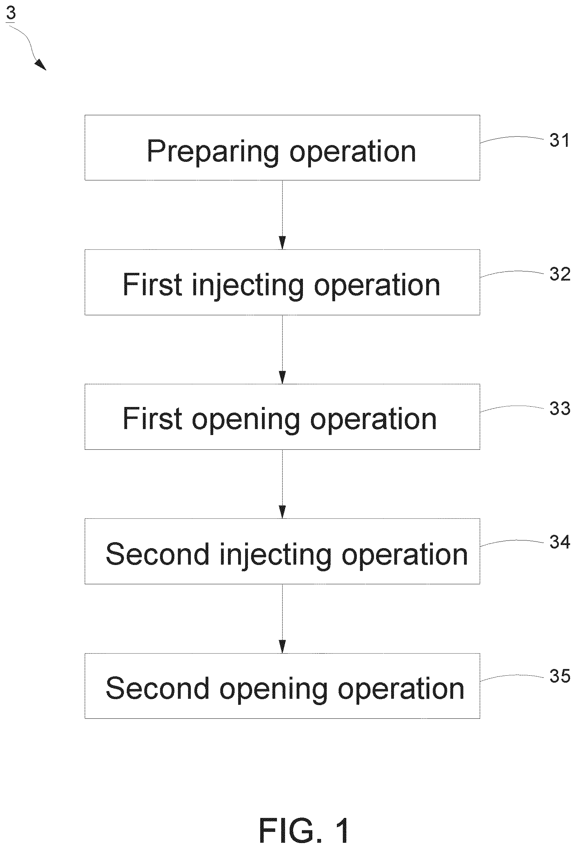

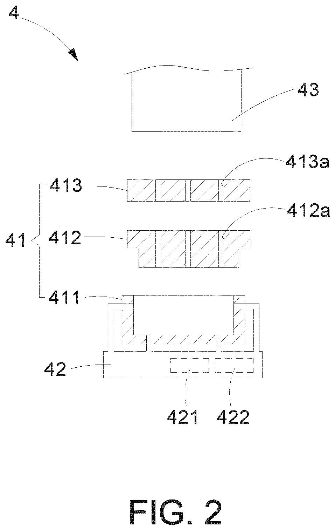

Referring to Fig. **1** and Fig. **2****,** a first preferred embodiment of this invention is related to a supercritical molding method **3** for manufacturing a double-layer sole structure **5.** The method **3** includes a preparing operation **31,** a first injecting operation **32,** a first opening operation **33,** a second injecting operation **34,** and a second opening operation **35.**

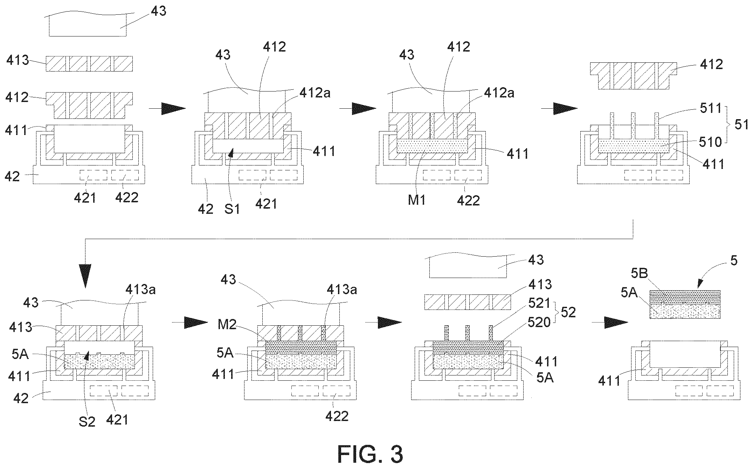

Regarding the preparing operation **31,** this operation **31** is executed to prepare an injection molding assembly **4.** The injection molding assembly **4** includes a mold system **41,** a gas system **42** connected to the mold system **42,** and an injector **43** adapted to inject a first injection material **M1** and a second injection material **M2** into the mold system **41.** The mold system **41** includes a lower mold **411,** a partition mold **412** removably engaged with the lower mold **411,** at least one first channel **412a** formed through the partition mold **412,** an upper mold **413** removably engaged with the lower mold **411,** and at least one second channel **413a** formed through the upper mold **413.** In this preferred embodiment, multiple first channels **412a** and multiple second channels **413a** are respectively illustrated as an example. Furthermore, the partition mold **412** can be separated from the lower mold **411** to present an open state. The partition mold **412** can also be engaged with the lower mold **411** to present a closed state. For example, Fig. **3** shows that the partition mold **412** is in close contact with the lower mold **411** by covering the top of the lower mold **411.** When the lower mold **411** is closely covered with the partition mold **412,** a first injection space **S1** is formed between the lower mold **411** and the partition mold **412,** and the first injection space **S1** is communicated with each first channel **412a.** The upper mold **413** can be separated from the lower mold **411** to present an open state. The upper mold **413** can also be engaged with the lower mold **411** to present a closed state. For example, Fig. **3** shows that the partition mold **413** is in close contact with the lower mold **411** by covering the top of the lower mold **411.** When the lower mold **411** is closely covered with the upper mold **413,** a second injection space **S2** is formed between the lower mold **411** and the upper mold **413,** and the second injection space **S2** is communicated with each second channel **413a.** Both of the first injection space **S1** and the second injection space **S2** are hermetically sealed.

The gas system **42** includes a pressure source **421** and a pump unit **422.** The pressure source **421** is adapted to introduce gas into the mold system **41.** The pump unit **422** is adapted to pump the gas out of the mold system **41.** Specifically, the pump unit **422** subjects the first injection space **S1** and the second injection space **S2** to the evacuation of gas respectively so that the first injection space **S1** and the second injection space **S2** are in a vacuum. The injector **43** is adapted to inject a first injection material **M1** and a second injection material **M2** into the first injection space **S1** and the second injection space **S2** respectively. Preferably, the first injection material **M1** and the second injection material **M2** can differ in colors. In this preferred embodiment, the first injection material **M1** and the second injection material **M2** have different colors.

Regarding the first injecting operation **32,** this operation **32** includes covering the lower mold **411** with the partition mold **412** closely to ensure that the first injection space **S1** is hermetically sealed between the lower mold **411** and the partition mold **412,** pumping gas into the first injection space **S1** with the pressure source **421** so that the first injection space **S1** is in a high-pressure state, operating the injector **43** to inject the first injection material **M1** into the first injection space **S1,** and operating the pump unit **422** to pump the gas out of the first injection space **S1.** Specifically, the injection allows the first injection material **M1** to pass through the first channels **412a** and enter the first injection space **S1.** The pumping action of the pump unit **422** takes the gas out, which means that the pumping action causes a vacuum to be created in the first injection space **S1** while injecting the first injection material **M1** into the first injection space **S1.** The pumping action allows the first injection material **M1** to expand naturally in the first injection space **S1,** and a first sole body **510** is formed because of the expansion. Meanwhile, the first channels **412a** are also filled with the first injection material **M1,** so a first surplus material **511** are generated in a protruding manner. Accordingly, a first semi-finished sole **51** is formed by the expansion and the filling of the first injection material **M1.** The first semi-finished sole **51** includes the first sole body **510** and the first surplus material **511** protruding from the first sole body **510.**

Regarding the first opening operation **33,** this operation **33** includes separating the partition mold **412** from the lower mold **411** and then trimming the first surplus material **511,** that is to say, cutting the first surplus material **511** off the first sole body **510.** The first surplus material **511** can be fully or partially cut off. As shown in the Fig. **3****,** the first surplus material **511** is properly cut off. After trimming the first surplus material **511,** the first semi-finished sole **51** is turned into a first sole **5A,** and the first sole **5A** stays in the lower mold **411.**

Regarding the second injecting operation **34,** this operation **34** includes covering the lower mold **411** with the upper mold **413** closely to ensure that the second injection space **S2** is hermetically sealed between the lower mold **411** and the upper mold **413,** pumping gas into the second injection space **S2** with the pressure source **421** so that the second injection space **S2** is in a high-pressure state, operating the injector **43** to inject the second injection material **M2** into the second injection space **S2,** and operating the pump unit **422** to pump the gas out of the second injection space **S2.** Specifically, the injection allows the second injection material **M2** to pass through the second channels **413a** and enter the second injection space **S2.** The pumping action of the pump unit **422** is executed while injecting the second injection material **M2** into the second injection space **S2,** so the gas is taken out, and a vacuum is created in the second injection space **S2.** Accordingly, the second injection material **M2** expands naturally on a top of the first sole **5A** in the second injection space **S2** to form a second sole body **520,** and the second sole body **520** is closely joined to the first sole **5A** while expanding. Meanwhile, a second surplus material **521** are generated in a protruding manner by filling the second channels **413a** with the second injection material **M2.** Therefore, a second semi-finished sole **52** is formed by the expansion and the filling of the second injection material **M2.** The second semi-finished sole **52** includes the second sole body **520** joined to the first sole **5A** and the second surplus material **521** protruding from the second sole body **520.**

Regarding the second opening operation **35,** this operation **35** includes separating the upper mold **413** from the lower mold **411** and then trimming the second surplus material **521,** that is to say, cutting the second surplus material **521** off the second sole body **520.** After trimming the second surplus material **521,** the second semi-finished sole **52** is turned into a second sole **5B,** and the second sole **5B** is firmly combined with the first sole **5A** to produce a double-layer sole structure **5.**

The double-layer sole structure **5** can be quickly and efficiently formed in the mold system **41** by executing the above operations in sequence, so the manufacturing efficiency is increased. The double-layer sole structure **5** can be formed with a good aesthetic appearance when the color of the first injection material **M1** is different from the color of the second injection material **M2.**

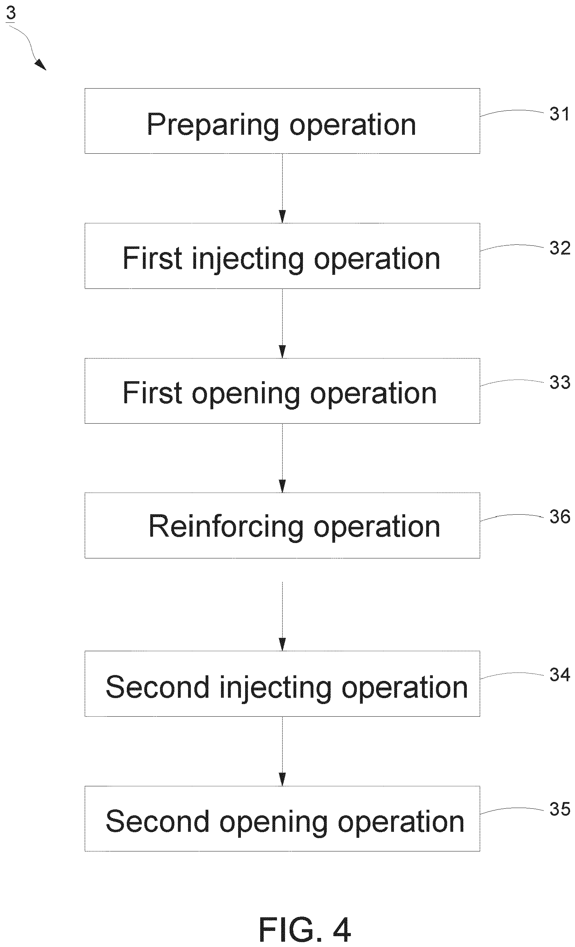

Referring to Fig. **4****,** a second preferred embodiment of this invention includes all operations **31∼35** disclosed in the first preferred embodiment. The second preferred embodiment is characterized in that the first injection material **M1** and the second injection material **M2** can be made of different materials so that the first injection material **M1** is different from the second injection material **M2** and that a reinforcing operation **36** can be executed between the first opening operation **33** and the second injecting operation **34.** The reinforcing operation **36** is mainly adopted to increase the combination of the first sole **5A** and the second sole **5B.** The execution of the reinforcing operation **36** can be conducted by appropriate ways, such as a surface treatment and a coating of adhesive.

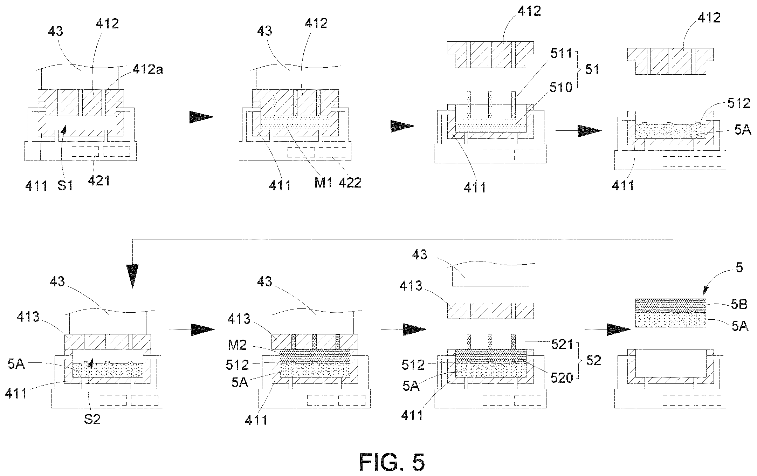

Regarding the surface treatment, a surface of the first sole **5A** can be roughened because of the reinforcing operation **36.** As for example shown in Fig. **5****,** a bumpy surface **512** is formed on the first sole **5A** by the reinforcing operation **36** so that the surface of the first sole **5A** is uneven or rough. The generation of the bumpy surface **512** can be achieved by some processes. For example, a scenario is that a surface with concavities alternating with convexities is directly formed on the first sole **5A** by bombardments associated with plasma, and the formed surface is deemed to be the bumpy surface **512.** Another scenario is that the partition mold **412** includes a working surface having concavities alternating with convexities. When the first sole **5A** is made by injecting and expanding, the first sole **5A** also forms a surface corresponding to the working surface of the partition mold **412** so that the formed surface is deemed to be the bumpy surface **512** to render the first sole **5A** rough. Because the bumpy surface **512** enlarges an area of the first sole **5A** which is in contact with the second sole body **520,** the first sole **5A** is joined to the second sole body **520** more firmly and closely to reinforce the combination of both soles **5A, 5B.**

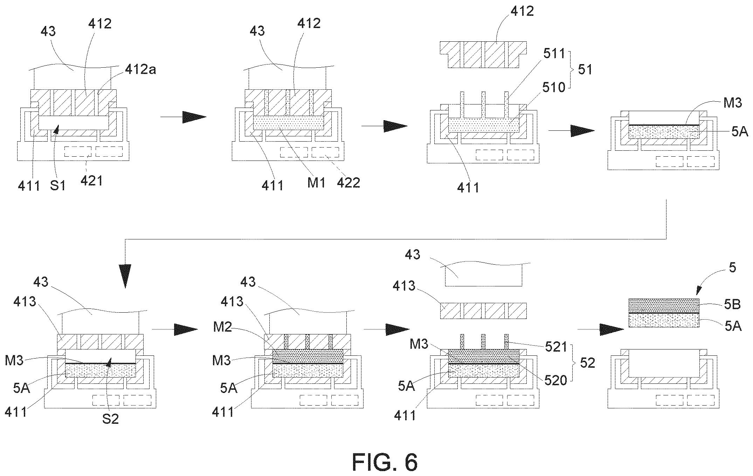

Regarding the coating of adhesive, as for example shown in Fig. **6****,** a surface of the first sole **5A** is coated with an adhesive material **M3** in the reinforcing operation **36.** The adhesion of the adhesive material **M3** allows the first sole **5A to** be firmly attached to the second sole body **520,** so the first sole **5A** is joined to the second sole body **520** more firmly and closely to reinforce the combination of both soles **5A, 5B.**

When the first injection material **M1** and the first injection material **M2** are different, the first sole **5A** and the second sole **5B** can differ in the softness and hardness of material. This allows users to adapt themselves to the double-layer structure **5** while wearing a shoe so that the double-layer sole structure **5** meets the demand of users for multiple applications.

To sum up, this invention takes advantages of a first injecting operation and a first opening operation to form a first sole by the injection and the expansion and also takes advantages of a second injecting operation and a second opening operation to form a second sole on a surface of the first sole by the injection and the expansion. The above operations are sequentially executed so that the second sole is quickly and firmly joined to the first sole to manufacture a double-layer sole structure, thereby increasing the efficiency of production.

While the embodiments are shown and described above, it is understood that further variations and modifications may be made without departing from the scope of this invention.

## Claims

1. A supercritical molding method (3) for manufacturing a double-layer sole structure (5) comprising in sequence:
a preparing operation (31) which includes preparing an injection molding assembly (4), said injection molding assembly (4) including a mold system (41), a gas system (42) connected to said mold system (41), and an injector (43) adapted to inject a first injection material (M1) and a second injection material (M2) into said mold system (41), wherein said mold system (41) includes a lower mold (411), a partition mold (412) removably engaged with said lower mold (411), and an upper mold (413) removably engaged with said lower mold (411), at least one first channel (412a) being formed through said partition mold (412), at least one second channel (413a) being formed through said upper mold (413), said gas system (42) including a pressure source (421) adapted to introduce gas into said mold system (41) and a pump unit (422) adapted to pump said gas out of said mold system (41) ;
a first injecting operation (32) which includes covering said lower mold (411) with said partition mold (412) closely so that a first injection space (S1) is formed between said lower mold (411) and said partition mold (412) and communicated with said at least one first channel (412a), pumping said gas into said first injection space (S1) with said pressure source (421) so that said first injection space (S1) is in a high-pressure state, operating said injector (43) to inject said first injection material (M1) into said first injection space (S1) through said at least one first channel (412a), and operating said pump unit (422) to pump said gas out of said first injection space (S1) while injecting said first injection material (M1) into said first injection space (S1) for creating a vacuum whereby said first injection material (M1) expands in said first injection space (S1) and fills said at least one first channel (412a), thereby forming a first semi-finished sole (51), said first semi-finished sole (51) including a first sole body (510) and a first surplus material (511) protruding from said first sole body (510) ;
a first opening operation (33) which includes separating said partition mold (412) from said lower mold (411), cutting said first surplus material (511) off said first sole body (510) to form a first sole (5A), and leaving said first sole (5A) in the lower mold (411);
a second injecting operation (34) which includes covering said lower mold (411) with said upper mold (413) closely so that a second injection space (S2) is formed between said lower mold (411) and said upper mold (413) and communicated with said at least one second channel (413a), pumping said gas into said second injection space (S2) with said pressure source (421) so that said second injection space (S2) is in a high-pressure state, operating said injector (43) to inject said second injection material (M2) into said second injection space (S2) through said at least one second channel (413a), and operating said pump unit (422) to pump said gas out of said second injection space (S2) while injecting said second injection material (M2) into said second injection space (S2) for creating a vacuum whereby said second injection material (M2) expands in said second injection space (S2) and fills said at least one second channel (413a), thereby forming a second semi-finished sole (52), said second semi-finished sole (52) including a second sole body (520) joined to said first sole (5A) and a second surplus material (521) protruding from said second sole body (520); and
a second opening operation (35) which includes separating said upper mold (413) from said lower mold (411) and cutting said second surplus material (521) off said second sole body (520) to form a second sole (5B), said second sole (5B) thereby being combined with said first sole (5A) after said second surplus material (521) is cut off to attain a double-layer sole structure (5) .

2. The method (3) according to claim 1, wherein said first injection material (M1) and said second injection material (M2) differ in colors.

3. The method (3) according to claim 1, wherein said first injection material (M1) is different from said second injection material (M2) .

4. The method (3) according to any one of claims 1 to 3, further comprising a reinforcing operation (36) executed between said first opening operation (33) and said second injecting operation (34), said reinforcing operation (36) including forming a bumpy surface (512) on said first sole (5A).

5. The method (3) according to any one of claims 1 to 3, further comprising a reinforcing operation (36) executed between said first opening operation (33) and said second injecting operation (34), said reinforcing operation (36) including coating a surface of said first sole (5A) with an adhesive material (M3) .
